# EUROPÄISCHE PATENTSCHRIFT

(11) **EP 3 445 640 B1**
(45) Veröffentlichungstag und Bekanntmachung des Hinweises auf die Patenterteilung: **09.06.2021**
(21) Anmeldenummer: 17716530.5
(22) Anmeldetag: 10.04.2017
(51) Int. Cl.: B62D 21/15, B60R 19/18

(54) **STRUKTURBAUTEIL**
STRUCTURAL ELEMENT
ÉLÉMENT DE STRUCTURE

(30) Priorität: 20.04.2016 DE 102016206642
(43) Veröffentlichungstag der Anmeldung: 27.02.2019
(73) Patentinhaber: Bayerische Motoren Werke Aktiengesellschaft, 80809 München (DE)
(72) Erfinder: HOFBAUER, Daniel, 84371 Triftern (DE); WOLFF, Thomas, 84028 Landshut (DE)
(86) Internationale Anmeldenummer: PCT/EP2017/058524
(87) Internationale Veröffentlichungsnummer: WO 2017/182310

(56) Entgegenhaltungen:
- EP-A1- 2 404 788
- WO-A1-03/037668
- WO-A1-2014/000831
- DE-A1-102006 058 604
- US-A1- 2015 069 773

## Beschreibung

Die vorliegende Erfindung betrifft ein Strukturbauteil, insbesondere für ein Fahrzeug, mit einem Träger und mindestens einer Energieabsorptionseinrichtung, die auf einem Abschnitt der äußeren Oberfläche des Trägers angeordnet ist.

Aus der DE 10 2014 207 948 A1 ist es bekannt, auf ein Strukturbauteil aus einem thermoplastischen Halbzeug ein Deformationsbauteil aus einem thermoplastischen Werkstoff aufzubringen. Ein derartiger Aufbau kommt beispielsweise im Bereich des Schwellers zur Anwendung. Bei einem seitlichen Crashlastfall nimmt die thermoplastische Deformationswabe die Energie auf, vernichtet dabei einen Großteil der Energie und leitet den Rest in den Biegeträger ein.

Aus der WO 03/037668 A1, die ein Strukturbauteil gemäß dem Oberbegriff des Anspruchs 1 offenbart, ist ein Aufprallträger einer Fahrzeugkarosserie bekannt, welcher ein längliches, kastenförmiges Hohlprofil aufweist, wobei an der dem Fahrzeug zugewandten Rückseite des Hohlprofils ein längliches, flächiges faserverstärktes Kunststoffteil angebracht ist.

Die US 2015/0069773 A1 zeigt eine Aufpralleinrichtung, mit einer Aufprallenergie aufnehmenden Vorrichtung.

Aus der EP 2 404 788 A1 ist ein Bauelement zur Aufnahme von Energie von einem auf das Bauelement ausgeübten Stoß durch Deformation bekannt.

Die WO 2014/000831 A1 betrifft ein Trägerelement in Hybridbauweise für einen Kraftwagen mit wenigstens einem Metallelement, welches mit einem Kunststoffelement verbunden ist.

Die DE 10 2006 058 601 A1 zeigt eine Crashbox zur Eingliederung zwischen einem Stoßfängerquerträger und einem Längsträger eines Kraftfahrzeugs. Ausgehend von diesem Stand der Technik macht es sich die vorliegende Erfindung zur Aufgabe, ein Strukturbauteil anzugeben, das sich durch eine besonders hohe Energieaufnahme auszeichnet. Es ist eine besondere Aufgabe der Erfindung, ein Strukturbauteil anzugeben, bei dem die spezifische Energieaufnahme bezogen auf die Bauraumbeanspruchung möglichst groß ist.

Diese Aufgabe wird mit einem Strukturbauteil mit den Merkmalen des unabhängigen Patentanspruchs 1 gelöst. Vorteilhafte Ausführungsformen der Erfindung sind in den abhängigen Patentansprüchen formuliert.

Zur Lösung dieser Aufgabe schlägt die Erfindung ein Strukturbauteil, insbesondere für ein Fahrzeug, vor, mit einem Träger und mindestens einer Energieabsorptionseinrichtung, die auf einem Abschnitt der äußeren Oberfläche des Trägers angeordnet ist. Der Träger ist weiterhin profiliert und weist eine innere Kammer auf. Dies bietet den Vorteil dass verhältnismäßig dünnwandige Träger verwendet werden können, die dadurch leichter sind gegenüber einem dickwandigeren oder unprofilierten Träger, wenn dieselben mechanischen Eigenschaften, insbesondere bezüglich Festigkeiten gegenüber Schubkräften, erzielt werden sollen. Weiterhin kann der Träger aus faserverstärktem Kunststoff, insbesondere aus glas- und/oder kohlenstofffaserverstärktem Kunststoff, ausgebildet sein. Die Verwendung derartiger Materialien bietet eine besonders hohe Festigkeit bei verhältnismäßig geringen Bauteilgewichten.

Erfindungsgemäß wird eine Energieabsorptionseinrichtung verwendet, die durch mechanischen Zerfall die auf sie einwirkende Energie bzw. Kraft abbaut oder reduziert. Als mechanischer Zerfall ist dabei ein Bersten,

Splittern, Bröseln oder eine sonstige Formänderung zu verstehen. Eine solche Energieabsorptionseinrichtung, auch als Crushingelement bekannt, ermöglicht eine deutlich erhöhte Energieaufnahme auf einem möglichst kurzen Deformationsweg. Dieser Vorteil wird gerade durch die Kombination mit einem profilierten Träger noch verstärkt. Der Träger sorgt für eine erforderliche Bauteilsteifigkeit und stützt die Energieabsorptionseinrichtung ab, so dass im Fall darauf einwirkender Schubkräfte die Absorptionseinrichtung gezielt und sicher zerbröseln kann.

Gemäß der Erfindung ist die Energieabsorptionseinrichtung zumindest abschnittsweise von vorspringenden Bereichen oder vorspringenden Wandungen umgeben. Dies bietet den Vorteil, dass ein Verrutschen der Energieabsorptionseinrichtung gegenüber dem Träger verhindert wird, wenn die darauf einwirkende Schubkraft auch eine Kraftkomponente in einer von der Hauptrichtung abweichenden Richtung aufweist. Der vorspringende Bereich oder die vorspringende Wandung bietet dadurch eine Gegenkraft zu der zusätzlichen Kraftkomponente.

In einer weiteren Ausführungsform kann der Träger vorspringende Bereiche, insbesondere vorspringende Wandungen, aufweisen, die eine Ausnehmung bilden, in welche die Energieabsorptionseinrichtung eingesetzt ist. Vorteilhafterweise werden dadurch Kraftkomponenten der im Crashfall wirkenden Schubkraft in beliebiger Richtung abgebaut, indem sie von einer Wandung aufgenommen werden. Darüber hinaus kann eine vollumschließende Wandung eine ausreichende Haftreibung aufbringen, so dass die Energieabsorptionseinrichtung ausreichend fixiert ist und nicht durch zusätzliche Maßnahmen wie Verschrauben, Verkleben oder dergleichen befestigt werden muss.

Die Energieabsorptionseinrichtung ist aus glas- und/oder kohlefaserverstärktem Kunststoff ausgebildet. Durch die Verwendung dieser Materialien ist die Energieabsorptionseinrichtung ebenfalls als faserverstärkter Kunststoff ausgebildet und kann besonders hohe Kräfte im Crashfall aufnehmen.

Die in der Energieabsorptionseinrichtung angeordneten Verstärkungsfasern können mit ihrer Längsseite im Wesentlichen senkrecht zur Oberfläche des Trägers ausgerichtet sein. Dadurch sind die Verstärkungsfasern im Wesentlichen parallel zu einer Belastungsrichtung im Crashfall ausgerichtet und können nochmals höhere Kräfte aufnehmen bzw. höhere Energien abbauen.

Darüber hinaus können der Träger sowie die Energieabsorptionseinrichtung im Pultrusionsverfahren hergestellt werden. Das Pultrusionsverfahren ist eines der wirtschaftlichsten Verfahren zur Herstellung faserverstärkter Kunststoffe in großer Stückzahl und eignet sich daher insbesondere für den Einsatz im Karosseriebau.

Weiterhin kann in der inneren Kammer ein Füllelement ausgebildet sein. Sofern mehrere Kammern vorgesehen sind, können in einer, in mehreren oder in allen Kammern jeweils eines oder mehrere Füllelemente angeordnet sein. Das Füllelement bzw. die Füllelemente können als Schaumkerne ausgebildet sein. Als Material für diesen Schaumkern eignen sich schäumende Materialien, wie beispielsweise Polyurethan und dergleichen. Das Füllelement kann auch als Wabenkern, z.B. Papier- oder Thermoplastwabe, ausgebildet sein. Zudem kann zur Füllung auch ein Vollmaterial eingesetzt werden. Alternativ dazu kann das Füllelement auch aus Vollmaterial ausgebildet sein. Das Füllelement kann dabei die innere Kammer bzw. die Füllelemente können dabei die inneren Kammern vollständig oder zumindest teilweise ausfüllen. Das Füllelement bietet den Vorteil, dass bei einer Schubbelastung des Trägers die Schubkräfte von einer Seite des Trägers, auf die sie unmittelbar wirken, auf eine gegenüberliegende Seite des Trägers überführt werden. Dadurch können die Schubkräfte besser aufgenommen werden und die Energieabsorptionseinrichtung besser durch den Träger abgestützt werden.

Weiterhin kann in dem Träger mindestens ein Anbindungselement angeordnet sein, zum Verbinden des Trägers mit weiteren Aggregaten. Alternativ oder zusätzlich dazu kann mindestens ein Anbindungselement in dem Füllelement angeordnet sein, zum Verbinden des Trägers mit weiteren Aggregaten. Die Anbindungselemente können als Hülsen mit oder ohne Innengewinde oder als Stifte mit oder ohne Außengewinde ausgebildet sein. Weitere Aggregate sind insbesondere andere Strukturbauteile oder auch Hochvoltspeicher, Motorlagerungen usw.

Die Verstärkungsfasern können organische oder anorganische Verstärkungsfasern sein. Die Verstärkungsfasern können beispielsweise Kohlenstofffasern sein. Diese bilden mit der Kunststoffmatrix einen kohlenstofffaserverstärkten Kunststoff, auch CFK (Carbon-faserverstärkter Kunststoff; englisch "Carbon-Fiber-Reinforced Plastic", CFRP) genannt. Das zugehörige FVK-Bauteil ist dann ein CFK- Bauteil. Die Verstärkungsfasern können beispielsweise auch Glasfasern sein. Diese bilden mit der Kunststoffmatrix einen glasfaserverstärkten Kunststoff, auch GFK genannt. Das zugehörige FVK-Bauteil ist dann ein GFK-Bauteil. Jedoch ist die Erfindung nicht darauf beschränkt, und die Verstärkungsfasern können z.B. auch Aramidfasern, Polyester-Fasern, Nylon-Fasern, Polyethylen-Fasern, PMMA-Fasern, Basaltfasern, Borfasern, Keramikfasern, Kieselsäurefasern, Stahl-Fasern und/oder Naturfasern sein.

Die Fasern können als Gelege, Gewebe, Geflecht oder als Wirrfaser in einer Faserlage des Halbzeugs vorgesehen sein. Darüber hinaus kann das Faserhalbzeug auch mehrere Faserlagen umfassen, die auch aus einer Kombination der oben genannten Schichtarten bestehen kann.

Das Material der Kunststoffmatrix mag insbesondere ein oder mehrere thermoplastische Kunststoffe (Thermoplaste) und/oder duroplastische Kunststoffe (Duroplaste) aufweisen. Zur Verwendung als Materials der Kunststoffmatrix eignen sich insbesondere Polyamide z.B. PA-6 oder PA-66 sowie Polyphtalamide. Faserverstärkte Kunststoffe mit einer thermoplastischen Matrix weisen den Vorteil auf, dass sie sich nachträglich umformen oder verschweißen lassen. Als thermoplastische Kunststoffe eignen sich beispielsweise: Polyetheretherketon (PEEK), Polyphenylensulfid (PPS), Polysulfon (PSU), Polyetherimid (PEI), Polyamide, Polyphtalamide und/oder Polytetrafluorethen (PTFE). Faserverstärkte Kunststoffe mit einer duroplastischen Matrix lassen sich nach dem Aushärten bzw. dem Vernetzen der Matrix nicht mehr umformen. Sie weisen vorteilhafterweise einen hohen Temperatureinsatzbereich auf. Dies gilt besonders für heißhärtende Systeme, die unter hohen Temperaturen ausgehärtet werden. Faserverstärkte Kunststoffe mit duroplastischer Matrix weisen meist die höchsten Festigkeiten auf. Als duroplastische Kunststoffe bzw. Matrix können z.B. folgende Harze zur Anwendung kommen: Epoxidharz (EP), ungesättigtes Polyesterharz (UP), Vinylesterharz (VE), Phenol-Formaldehydharz (PF), Diallylphthalatharz (DAP), Methacrylatharz (MMA), Polyurethan (PUR), Aminoharze, Melaminharz (MF/MP) und/oder Harnstoffharz (UF).

Als Materialien für den Schaumkern eignen sich insbesondere Polyurethan (PUR), Polystyrol (PS), Polyvinylchlorid (PVC) oder Polymethacrylimide.

Im Sinne dieser Erfindung sind Strukturbauteile Karosseriebauteile, die beispielsweise bei der Herstellung einer Fahrzeugkarosserie miteinander verbunden werden. Derartige Bauteile sind insbesondere Seitenschweller, Dachseitenrahmen, Dachspriegel, A-Säulen, B-Säulen, C-Säulen und dergleichen. Darüber hinaus sind aber auch Stoßstangenträger als Strukturbauteile im Sinne dieser Erfindung zu verstehen, da die Erfindung auch hierauf anwendbar ist.

Im Folgenden soll die Erfindung anhand der Figurenbeschreibung näher erläutert werden. Die Figur, die Beschreibung und die Ansprüche enthalten Merkmale, die ein Fachmann auch in anderer Kombination in Betracht ziehen würde, um die Erfindung an andere Anforderungen anzupassen.

Es zeigt in schematischer Ansicht,

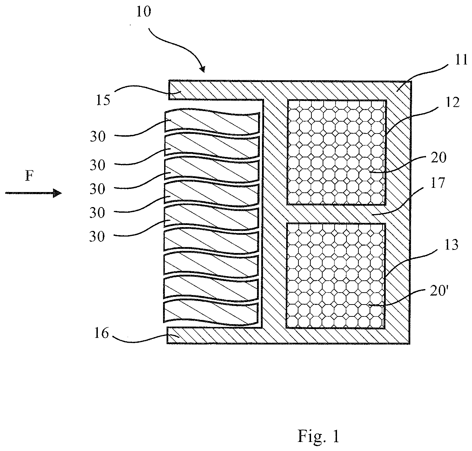

- Fig. 1: eine Schnittansicht durch ein Strukturbauteil.

Figur 1 zeigt einen Schnitt senkrecht zur Längsrichtung eines Strukturbauteils 10. Das Strukturbauteil 10 umfasst einen Träger 11, der profiliert ist und zwei innere Kammern 12 und 13 aufweist. In weiteren, nicht dargestellten Ausführungsformen kann ein Träger 11 auch nur eine einzelne Kammer oder mehr als zwei Kammern aufweisen. In Figur 1 sind die beiden Kammern 12 und 13 durch einen Steg 17 voneinander getrennt. In weiteren, nicht dargestellten Ausführungsformen, können auch mehrere Stege vorgesehen sein. In den Kammern 12, 13 sind Schaumkerne 20, 20' vorgesehen, die hier beispielhaft die Kammern 12, 13 vollständig ausfüllen. Der Steg 17 sowie die Schaumkerne 20, 20' übertragen im Crashfall die Kraft, die in die figürlich linke, vertikal verlaufende Wand des Trägers 11 eingeleitet wird, auf die figürlich rechte, vertikal verlaufende Wand des Trägers 11. Statt dem Schaumkern kann auch ein alternatives Füllelement, wie beispielsweise Wabenkerne aus Thermoplast, Papier usw. verwendet werden.

Wie aus Figur 1 weiterhin ersichtlich ist, weist der Träger 11 linksseitig vorspringende Wandungen 15 und 16 auf. Diese Wandungen 15, 16 nehmen dazwischen eine oder mehrere Energieabsorptionseinrichtungen bzw. Crushelemente 30 auf. Die Crushelemente 30 sind damit in einem Bereich der Oberfläche des Trägers 11 angeordnet. Der Bereich der Oberfläche kann seitlich teilweise oder auch vollständig von den Wandungen 15, 16 umgeben sein. In weiteren Ausführungsformen kann auf die Wandungen 15, 16 verzichtet werden, so dass die Crushelemente seitlich nicht abgestützt sind.

Im Fall eines seitlichen Crashes - hier repräsentiert durch die Kraft F und den dazugehörigen Pfeil - wird eine Kraft bzw. Energie auf diese Crushelemente 30 ausgeübt. Der Träger 11 wirkt der Schubkraft F durch eine Gegenkraft entgegen, so dass die Crushelemente 11 bersten und dabei Energie abgebaut wird.

In der Darstellung in Figur 1 wirkt die Schubkraft F senkrecht auf den Träger 11 ein. Allerdings kann die Kraft F in anderen Fällen auch unter einem schrägen Winkel auf den Träger 11 einwirken. In diesen Fällen wirkt dann nur eine Kraftkomponente senkrecht auf den Träger 11 ein. Die Kraftkomponenten, die nicht senkrecht auf den Träger einwirken, werden durch die Wandungen 15, 16 aufgefangen. Mit anderen Worten: Die Wandungen 15, 16 bauen Gegenkräfte auf, zur Stützung der nicht senkrecht wirkenden Kraftkomponenten.

Der Träger 11 bildet beispielhaft die Grundstruktur eines Schwellers. Er ist dabei aus endlosfaserverstärkten Kohlenstofffasern ausgebildet. Dabei weisen ca. 70 % der Endlosfasern in Längsrichtung des Trägers 11. Ca. 30 % der Endlosfasern sind in einem Winkel von +45° und/oder -45° angeordnet. Die Fasern sind dann von einem Harz umgeben. Die Schaumkerne werden nachträglich, durch Ausschäumen der Kammern in dem Träger 11 erzeugt. Das Crushelemente wird ebenfalls nachträglich mit dem bestehenden Träger 11 gefügt.

Der Träger 11 kann darüber hinaus noch Anbindungselemente aufweisen, insbesondere Inserts zur Anbindung des Hochvoltspeichers. Die Inserts können nachträglich in den Träger eingebracht werden oder bereits mit dem Einbringen des Schaums. Die Festigkeit des Strukturbauteils 10 reicht aus, um den Energiespeicher eines elektrisch betriebenen Fahrzeugs zu stützen.

## Patentansprüche

1. Strukturbauteil (10), insbesondere für ein Fahrzeug, mit
- einem Träger (11), der profiliert ist und zumindest eine innere Kammer (20, 20') aufweist, und
- mindestens einer Energieabsorptionseinrichtung (30), die auf einem Abschnitt der äußeren Oberfläche des Trägers (11) angeordnet und aus glas- und/oder kohlefaserverstärktem Kunststoff ausgebildet ist,
**dadurch gekennzeichnet, dass**
- die Energieabsorptionseinrichtung (30) durch Zerbröseln, die darauf einwirkende Energie/Kraft abbaut und
- die Energieabsorptionseinrichtung (30) zumindest abschnittsweise von vorspringenden Bereichen oder vorspringenden Wandungen (15, 16) umgeben ist.

2. Strukturbauteil (10) nach Anspruch 1, **dadurch gekennzeichnet, dass** der Träger (11) aus faserverstärktem Kunststoff, insbesondere aus glas- und/oder kohlenstofffaserverstärktem Kunststoff ausgebildet ist.

3. Strukturbauteil (10) nach Anspruch 1, **dadurch gekennzeichnet, dass** die in der Energieabsorptionseinrichtung (30) angeordneten Verstärkungsfasern mit ihrer Längsrichtung im Wesentlichen senkrecht zur Oberfläche des Trägers ausgerichtet sind.

4. Strukturbauteil (10) nach einem der vorhergehenden Ansprüche,
**dadurch gekennzeichnet, dass** der Träger (11) die vorspringenden Bereiche, insbesondere die vorspringenden Wandungen, aufweist, die eine Ausnehmung bilden, in welche die Energieabsorptionseinrichtung (30) eingesetzt ist.

5. Strukturbauteil (10) nach einem der vorhergehenden Ansprüche,
**dadurch gekennzeichnet, dass** der Träger (11) als Pultrusionsprofil ausgebildet ist.

6. Strukturbauteil (10) nach einem der vorhergehenden Ansprüche,
**dadurch gekennzeichnet, dass** in der inneren Kammer (20, 20') mindestens ein Füllelement, insbesondere ein Schaumkern, ein Wabenkern oder ein Kern aus Vollmaterial ausgebildet ist.

7. Strukturbauteil (10) nach einem der vorhergehenden Ansprüche,
**dadurch gekennzeichnet, dass** in dem Träger (11) mindestens ein Anbindungselement angeordnet ist, zum Verbinden des Trägers mit weiteren Aggregaten.

8. Strukturbauteil (10) nach Anspruch 6,
**dadurch gekennzeichnet, dass** in dem Füllelement (20, 20') mindestens ein Anbindungselement angeordnet ist, zum Verbinden des Trägers mit weiteren Aggregaten.

## Claims

1. Structural component (10), in particular for a vehicle, having
- a beam (11) which is profiled and has at least one inner chamber (20, 20'), and
- at least one energy absorption device (30) which is arranged on a portion of the outer surface of the beam (11) and is formed from glass- and/or carbon-fibre-reinforced plastic,
**characterized in that**
- the energy absorption device (30) degrades the energy/force acting thereon by crumbling, and
- the energy absorption device (30) is surrounded at least in certain portions by projecting regions or projecting walls (15, 16).

2. Structural component (10) according to Claim 1, **characterized in that** the beam (11) is formed from fibre-reinforced plastic, in particular from glass- and/or carbon-fibre-reinforced plastic.

3. Structural component (10) according to Claim 1, **characterized in that** the reinforcing fibres arranged in the energy absorption device (30) have their longitudinal direction oriented substantially perpendicular to the surface of the beam.

4. Structural component (10) according to one of the preceding claims, **characterized in that** the beam (11) comprises the projecting regions, in particular the projecting walls, which form a recess in which the energy absorption device (30) is inserted.

5. Structural component (10) according to one of the preceding claims, **characterized in that** the beam (11) is designed as a pultruded profile.

6. Structural component (10) according to one of the preceding claims, **characterized in that** at least one filling element, in particular a foam core, a honeycomb core or a core of solid material, is formed in the inner chamber (20, 20').

7. Structural component (10) according to one of the preceding claims, **characterized in that** at least one attachment element is arranged in the beam (11) and intended for connecting the beam to further units.

8. Structural element (10) according to Claim 6, **characterized in that** at least one attachment element is arranged in the filling element (20, 20') and intended for connecting the beam to further units.

## Revendications

1. Élément de structure (10) destiné en particulier à un véhicule et comprenant
- un support (11) qui est profilé et qui comporte au moins une chambre intérieure (20, 20'), et
- au moins un dispositif d'absorption d'énergie (30) qui est disposé sur une portion de la surface extérieure du support (11) et qui est en matière synthétique renforcée de fibres de verre et/ou de carbone,
**caractérisé en ce que**
- le dispositif d'absorption d'énergie (30) réduit l'énergie/la force, agissant sur lui, par émiettement et
- le dispositif d'absorption d'énergie (30) est entouré au moins par portions par des zones en saillie ou des parois en saillie (15, 16).

2. Élément de structure (10) selon la revendication 1, **caractérisé en ce que** le support (11) est réalisé en matière synthétique renforcée de fibres, notamment en matière synthétique renforcée de fibres de verre et/ou de carbone.

3. Élément de structure (10) selon la revendication 1, **caractérisé en ce que** les fibres de renfort disposées dans le dispositif d'absorption d'énergie (30) sont orientées, quant à leur direction longitudinale, sensiblement perpendiculairement à la surface du support.

4. Élément de structure (10) selon l'une des revendications précédentes, **caractérisé en ce que** le support (11) comporte les zones en saillie, en particulier les parois en saillie, qui forment un évidement dans lequel le dispositif d'absorption d'énergie (30) est inséré.

5. Élément de structure (10) selon l'une des revendications précédentes, **caractérisé en ce que** le support (11) est conçu sous la forme d'un profilé de pultrusion.

6. Élément de structure (10) selon l'une des revendications précédentes, **caractérisé en ce que** au moins un élément de remplissage, en particulier un cœur en mousse, un cœur en nid d'abeille ou un cœur en matériau plein, est formé dans la chambre intérieure (20, 20').

7. Élément de structure (10) selon l'une des revendications précédentes, **caractérisé en ce que** au moins un élément de liaison est disposé dans le support (11) pour relier le support à d'autres unités.

8. Élément de structure (10) selon la revendication 6, **caractérisé en ce que**
au moins un élément de liaison est disposé dans l'élément de remplissage (20, 20') pour relier le support à d'autres unités.
